# FASCICULE DE BREVET EUROPEEN

(11) **EP 1 088 479 B1**
(45) Date de publication et mention de la délivrance du brevet: **14.01.2004**
(21) Numéro de dépôt: 00402647.2
(22) Date de dépôt: 25.09.2000
(51) Int. Cl.: A01J 25/13

(54) **Support d'égouttage pour la fabrication de fromages**
Entwässerungsplatte für die Käseherstellung
Draining platform for manufacturing cheese

(30) Priorité: 29.09.1999 FR 9912152
(43) Date de publication de la demande: 04.04.2001
(73) Titulaire: SOCIETE D'ETUDE, REALISATION ET VENTE A L'INDUSTRIE, SERVI S.A., 37130 Langeais (FR)
(72) Inventeur: Grimeaud, Lionel Noel, 37520 La Riche (FR)
(74) Mandataire: Lemoine, Robert

(56) Documents cités:
- EP-A- 0 559 584
- FR-A- 1 138 023
- FR-A- 2 443 199
- FR-A- 2 556 559

## Description

La présente invention concerne un support d'égouttage pour la fabrication de fromages à partir de lait caillé selon le préambule de la revendication 1.

Les supports d'égouttage sont conçus pour recevoir des moules à fromage contenant du lait caillé et assurer l'évacuation du lactosérum se séparant de ce dernier.

Ils sont généralement utilisés avec les moules à fromage sous la forme d'empilements pouvant être retournés afin de faciliter l'évacuation du lactosérum et d'accélérer la fabrication des fromages.

Les supports d'égouttage actuels ne donnent toutefois pas pleinement satisfaction. En effet, ils ne permettent pas une évacuation complète et uniforme du lactosérum, ni une circulation d'air convenable autour des fromages en cours de fabrication.

Par ailleurs, ils sont difficiles à nettoyer avec les moyens disponibles habituellement dans les fromageries.

La présente invention se propose plus particulièrement de remédier à ces inconvénients et, pour ce faire, elle a pour objet un support d'égouttage qui comprend deux plaques maintenues à distance l'une de l'autre par des entretoises et pourvues de perforations pour l'évacuation du lactosérum provenant du caillé, caractérisé en ce que les faces en regard des plaques sont pourvues de saillies entourant les extrémités des perforations qui débouchent sur elles, et en ce que les perforations des plaques ne sont pas situées en face les unes des autres.

Grâce à ces dispositions, le lactosérum provenant d'un moule est évacué sans risquer de tomber sur le caillé contenu dans le moule situé sous le support d'égouttage puisque les plaques ne comportent pas de perforations se faisant mutuellement face et que les saillies entourant les perforations de la plaque inférieure empêchent le lactosérum de pénétrer dans ces dernières.

Par ailleurs, l'efficacité du support d'égouttage reste la même après le retournement de celui-ci, les deux plaques étant conformées de façon à pouvoir exercer les mêmes fonctions lorsqu'elles sont respectivement dans les mêmes positions.

De plus, comme une espace libre est prévu entre les deux plaques, une bonne circulation d'air est possible autour des fromages.

Selon un mode de réalisation particulier, les faces des plaques qui ne sont pas en regard sont pourvues de protubérances séparées par des rainures dans lesquelles sont ménagées les perforations.

Les plaques ont dans ce cas l'avantage de servir également de stores.

Ainsi, les stores qui doivent actuellement être interposés entre les supports d'égouttage et les moules à fromage peuvent être purement et simplement supprimés, ce qui permet de réduire de façon notable les achats de matériel ainsi que le nombre et le coût des opérations de manutention et de nettoyage.

De préférence, les protubérances et les perforations sont de forme allongée.

On notera ici que les perforations sont de préférence allongées et étroites afin d'éviter que du caillé puisse être évacué avec le lactosérum.

Par ailleurs, il est souhaitable que les perforations ménagées dans chacune des rainures soient décalées longitudinalement par rapport aux perforations ménagées dans les rainures adjacentes.

Un tel décalage longitudinal permet en effet une évacuation uniforme du lactosérum sur toute la surface de contact du caillé avec le support d'égouttage.

Avantageusement, les plaques peuvent comporter un rebord périphérique entourant chacune de leurs faces qui ne sont pas en regard, les rebords périphériques permettant de positionner les moules sur les supports d'égouttage de façon rapide et précise.

Selon une variante de réalisation de l'invention, l'un des rebords périphériques peut constituer la paroi latérale d'un moule à fromage.

Cette disposition permet encore de réduire les coûts en matériel et de diminuer le nombre des opérations de manutentions et de nettoyage.

Avantageusement, le support d'égouttage servant-de moule comporte deux extrémités de formes complémentaires afin qu'il puisse être empilable avec d'autres supports d'égouttage similaires.

Enfin, on notera que le support d'égouttage conforme à l'invention est de préférence réalisé en matière plastique, notamment en polypropylène, ce qui permet de réduire son coût de fabrication et son poids de façon significative.

Deux modes d'exécution de la présente invention seront décrits ci-après à titre d'exemples nullement limitatifs en référence aux dessins annexés dans lesquels :
- la figure 1 est une vue schématique de dessus d'un support d'égouttage conforme à l'invention ;
- la figure 2 est une vue à échelle agrandie d'une partie de la zone entourée par le cercle II de la figure 1 ;
- la figure 3 est une vue en coupe selon la ligne III-III de la figure 2 ;
- la figure 4 est une vue à échelle agrandie d'une partie de l'une des faces en regard des deux plaques ;
- la figure 5 est une vue en coupe selon la ligne V-V de la figure 3 ; et
- la figure 6 est une vue en coupe de deux supports d'égouttage selon une variante de réalisation, ces supports étant empilés l'un sur l'autre.

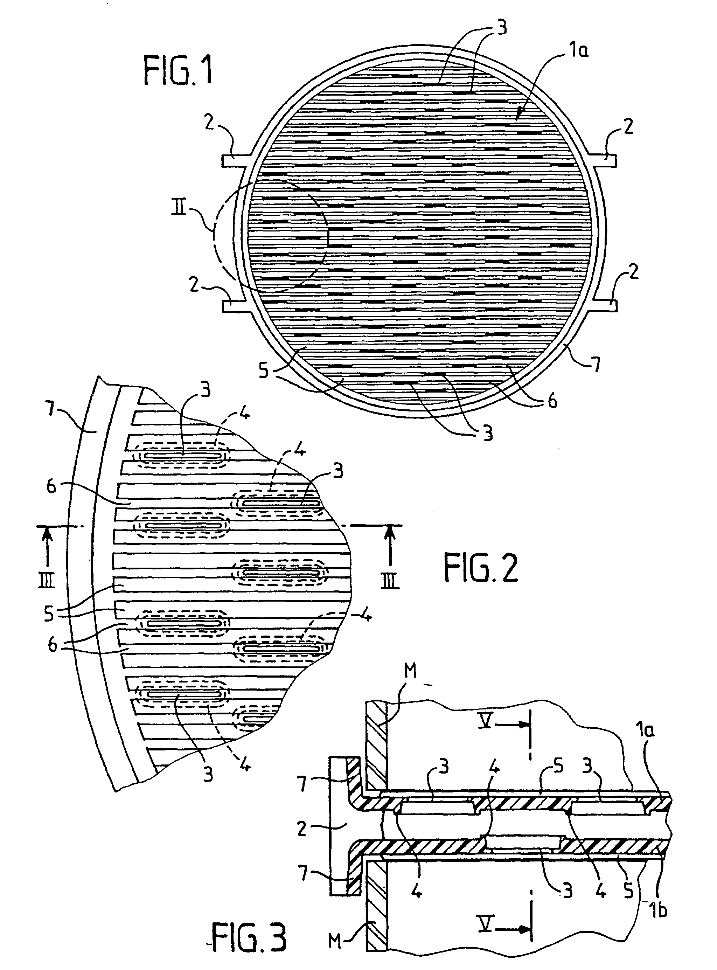

Le support d'égouttage que l'on peut voir sur les figures 1 à 5 a été mis au point pour supporter un moule à fromage M destiné à renfermer du caillé et permettre l'évacuation du lactosérum contenu dans ce dernier.

Il comprend une plaque supérieure la et une plaque inférieure 1b maintenues à distance l'une au-dessus de l'autre par des entretoises 2.

Les plaques s'étendent horizontalement en position d'utilisation et sont pourvues de perforations 3 pour l'évacuation du caillé.

Elles ont une forme circulaire dans l'exemple représenté mais il va de soi qu'elles pourraient avoir une toute autre forme.

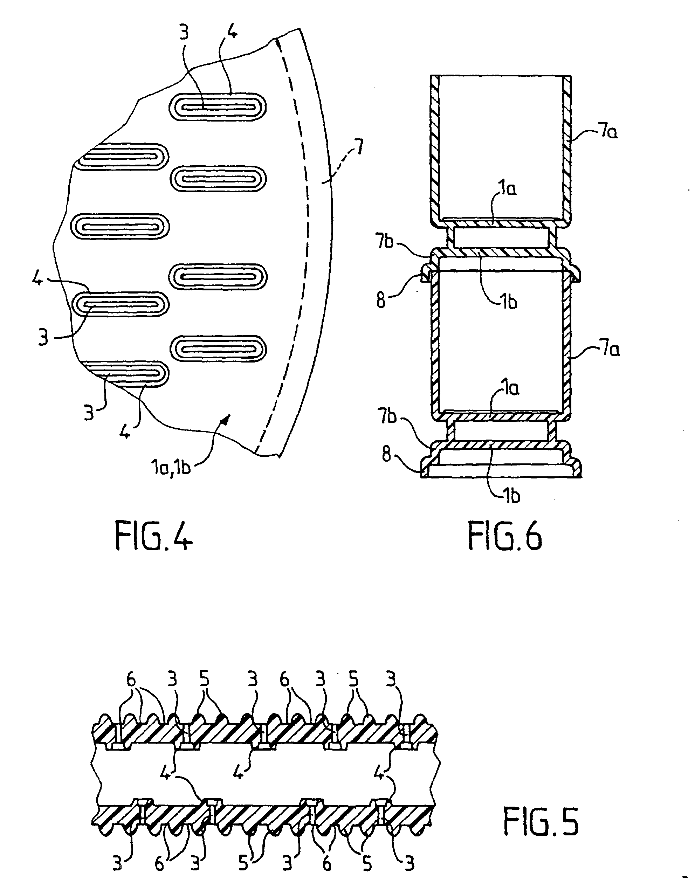

En se référant plus particulièrement aux figures 3 et 4, on remarquera que les perforations des plaques la, 1b ne sont pas situées en face les unes des autres et que les faces en regard des plaques sont pourvues de saillies 4 entourant les extrémités correspondantes des perforations.

Grâce à ces deux dispositions, le lactosérum provenant du caillé situé sur la plaque supérieure la ne peut s'écouler sur le caillé contenu dans le moule à fromage M situé sous la plaque inférieure 1b.

Des moyens appropriés non représentés sont normalement prévus pour évacuer le lactosérum parvenant sur la plaque inférieure.

En se référant maintenant aux figures 3 et 5, on constatera que les faces des plaques la, 1b qui ne sont pas en regard sont pourvues de protubérances rectilignes 5 séparées par des rainures 6 dans lesquelles sont ménagées les perforations 3.

Les protubérances 5 s'étendent parallèlement entre elles et ont en coupe transversale une section pouvant être semi-cylindrique ou semi-elliptique.

Les rainures 6, qui sont également rectilignes et parallèles entre elles, comportent chacune plusieurs perforations 3, lesquelles sont décalées longitudinalement par rapport aux perforations des rainures adjacentes, afin de permettre une évacuation uniforme du lactosérum sur toute la surface de la plaque supérieure.

On notera par ailleurs que les perforations 3 sont de forme allongée et sont étroites afin d'éviter que du caillé puisse être évacué avec le lactosérum.

Les faces des plaques qui ne sont pas en regard ont une structure équivalente à celle d'un store et ont la même fonction. Ainsi, le support d'égouttage conforme à l'invention permet de supprimer purement et simplement les stores qui devraient jusqu'ici être interposés entre les supports d'égouttage et les moules remplis de caillé.

Enfin, on remarquera que les faces des plaques la, 1b qui ne sont pas en regard sont ceinturées par un rebord périphérique 7.

Le rebord périphérique 7 de la plaque inférieure 1b permet d'adapter facilement et avec précision le support d'égouttage sur un moule à fromage M alors que le rebord périphérique de la plaque supérieure la permet de positionner facilement et rapidement un autre moule à fromage M sur le support d'égouttage.

Le support d'égouttage représenté sur la figure 6 diffère de celui qui vient d'être décrit en ce que la plaque supérieure la comporte un rebord 7a qui constitue la paroi latérale d'un moule à fromage tandis que la plaque inférieure 1b comporte un rebord 7b qui se termine par un évasement annulaire 8.

Grâce à cet évasement, le support d'égouttage peut être facilement empilé sur l'extrémité supérieure du rebord 7a d'un autre support d'égouttage.

Pour être complet, on précisera que les supports d'égouttage qui viennent d'être décrits sont de préférence réalisés en matière plastique, notamment en polypropylène.

## Revendications

1. Support d'égouttage pour la fabrication de fromages à partir de lait caillé, comprenant deux plaques (1a, 1b) maintenues à distance l'une de l'autre par des entretoises (2) et pourvues de perforations (3) pour l'évacuation du lactosérum provenant du caillé, **caractérisé en ce que** les faces en regard des plaques sont pourvues de saillies (4) entourant les extrémités des perforations qui débouchent sur elles, et **en ce que** les perforations des plaques ne-sont pas situées en face les unes des autres.

2. Support d'égouttage selon la revendication 1, **caractérisé en ce que** les faces des plaques (1a, 1b) qui ne sont pas en regard sont pourvues de protubérances (5) séparées par des rainures (6) dans lesquelles sont ménagées les perforations (3).

3. Support d'égouttage selon la revendication 2, **caractérisé** en que les protubérances (5) et les perforations (6) sont de forme allongée.

4. Support d'égouttage selon la revendication 2 ou 3, **caractérisé en ce que** les perforations (3) ménagées dans chacune des rainures (6) sont décalées longitudinalement par rapport aux perforations (5) ménagées dans les rainures (6) adjacentes.

5. Support d'égouttage selon l'une quelconque des revendications-précédentes, **caractérisé en ce que** les plaques (1a, 1b) comportent un rebord périphérique (7 ; 7a, 7b) entourant chacune de leurs faces qui ne sont pas en regard.

6. Support d'égouttage selon la revendication 5, **caractérisé en ce que** l'un (7a) des rebords périphériques constitue la paroi latérale d'un moule à fromage.

7. Support d'égouttage selon la revendication 6, **caractérisé en ce que** les extrémités de ses deux rebords (7a,7b) ont des formes complémentaires afin qu'il puisse être empilable avec d'autres supports d'égouttage similaires.

8. Support d'égouttage selon l'une quelconque des revendications précédentes, **caractérisé en ce qu'**il est réalisé en matière plastique, notamment en polypropylène.

## Claims

1. A draining platform for manufacturing cheese from curd, comprising two plates (1a, 1b), which are kept apart from each other by cross members (2) and are provided with perforations (3) for draining off lactoserum from the curd, **characterized in that** the faces of the plates which lie opposite each other are provided with protrusions (4) surrounding the ends of the perforations opening on them, and **in that** the perforations of the plates are not facing each other.

2. The draining platform according to claim 1, **characterized in that** the faces of the plates (1a, 1b) which do not lie opposite each other are provided with protuberances (5) separated by grooves (6), in which the perforations (3) are formed.

3. The draining platform according to claim 2, **characterized in that** the protuberances (5) and perforations (3) have an elongated shape.

4. The draining platform according to claim 2 or 3, **characterized in that** the perforations (3) formed in each groove (6) are offset lengthwise with respect to the perforations (3) formed in adjacent grooves (6).

5. The draining platform according to any of the preceding claims, **characterized in that** the plates (1a, 1b) have a peripheral flange (7; 7a, 7b) surrounding each of their faces that do not lie opposite each other.

6. The draining platform according to claim 5, **characterized in that** one peripheral flange (7a) forms the side wall of a cheese mold.

7. The draining platform according to claim 6, **characterized in that** the ends of the two flanges (7a, 7b) thereof have complementary shapes so that it may be stacked up with other similar draining platforms.

8. The draining platform according to any of the preceding claims, **characterized in that** it is made of plastic material, in particular of polypropylene.

## Patentansprüche

1. Entwässenrngsplattenvorrichtung für die Herstellung von Käse aus geronnener Milch, zwei Platten (1a, 1b) umfassend, voneinander auf Abstand gehalten durch Distanzelemente (2) und versehen mit Perforationen (3) zum Abfließen des Milchserums aus der geronnenen Milch,
**dadurch gekennzeichnet,**
**dass** die sich gegenüberstehenden Flächen bzw. Seiten der Platten Ausstülpungen (4) aufweisen, welche die Enden der Perforationen umgeben, die auf ihnen münden, und dadurch, dass die Perforationen der Platten sich nicht gegenüberstehen.

2. Entwässerungsplattenvorrichtung nach Anspruch 1, **dadurch gekennzeichnet, dass** die Flächen bzw. Seiten der Platten (1a, 1b), die sich nicht gegenüberstehen, Vorsprünge (5) aufweisen, getrennt durch Rillen (6), in denen die Perforationen (3) realisiert sind.

3. Entwässerungsplattenvorrichtung nach Anspruch 2, **dadurch gekennzeichnet, dass** die Vorsprünge (5) und die Perforationen (3) von länglicher Form sind.

4. Entwässerungsplattenvorrichtung nach Anspruch 2 oder 3, **dadurch gekennzeichnet, dass** die Perforationen (3) in jeder der Rillen (6) longitudinal versetzt sind gegenüber den Perforationen (3) in den benachbarten Rillen (6).

5. Entwässerungsplattenvorrichtung nach einem der vorangehenden Ansprüche, **dadurch gekennzeichnet, dass** die Platten (1a, 1b) einen umgebogenen peripheren Rand (7; 7a, 7b) umfassen, der jede ihrer sich nicht gegenüberstehenden Seiten umgibt.

6. Entwässerungsplattenvorrichtung nach Anspruch 5, **dadurch gekennzeichnet, dass** einer der umgebogenen peripheren Ränder die Seitenwand einer Käseform bildet.

7. Entwässerungsplattenvorrichtung nach Anspruch 6, **dadurch gekennzeichnet, dass** die Enden ihrer beiden umgebogenen Ränder (7a, 7b) komplementäre Formen haben, so dass sie mit anderen gleichen bzw. ähnlichen Entwässerungsplattenvorrichtungen gestapelt werden können.

8. Entwässerungsplattenvorrichtung nach einem der vorangehenden Ansprüche, **dadurch gekennzeichnet, dass** sie aus Kunststoff hergestellt wird, insbesondere aus Polypropylen.
